# EUROPÄISCHE PATENTANMELDUNG

(11) **EP 3 151 176 A1**
(43) Veröffentlichungstag der Anmeldung: **05.04.2017**
(21) Anmeldenummer: 16189093.4
(22) Anmeldetag: 16.09.2016
(51) Int. Cl.: G06Q 10/06

(54) **VERFAHREN ZUR PLANUNG UND ZUORDNUNG VON PRODUKTIONEN**

(30) Priorität: 30.09.2015 DE 102015116569
(71) Anmelder: manroland web systems GmbH, 86153 Augsburg (DE)
(72) Erfinder: Elchlepp, Andreas, 86551 Aichach (DE); Enke, Gregor, 86156 Augsburg (DE)

(57) **Zusammenfassung**

Verfahren zur Zuordnung mindestens eines Fertigungsauftrages mit bekannten Jobdaten aus einer oder einer Mehrzahl von zur Abarbeitung anstehenden Fertigungsaufträgen auf eine spezifische Produktionseinrichtung von einer Mehrzahl von Produktionseinrichtungen, wobei jede der Produktionseinrichtungen durch Produktionseinrichtungsdaten hinsichtlich ihrer Produktionsmöglichkeiten beschreibbar ist. Der Erfindung liegt daher die Aufgabe zugrunde, ein Verfahren zu entwickeln, mit welchem eine effizienzoptimierte Zuordnung mindestens eines Fertigungsauftrages auf eine spezifische Produktionseinrichtung ohne manuelle Eingriffe und personengebundene Analyse ermöglicht wird. Die Erfindung umfasst ein Verfahren, bei welchem die Zuordnung des mindestens einen Fertigungsauftrages auf eine spezifische Produktionseinrichtung hinsichtlich mindestens eines Sortierungskriteriums automatisiert durchgeführt wird.

## Beschreibung

Die Erfindung betrifft ein Verfahren zur Planung und Zuordnung von mindestens einem Fertigungsauftrages mit bekannten Jobdaten aus einer oder einer Mehrzahl von zur Abarbeitung anstehenden Fertigungsaufträgen auf eine spezifische Produktionseinrichtung von einer Mehrzahl von Produktionseinrichtungen, wobei jede der Produktionseinrichtungen durch Produktionseinrichtungsdaten hinsichtlich ihrer Produktionsmöglichkeiten beschreibbar ist.

Bei Unternehmen mit einer Mehrzahl von Produktionseinrichtungen wie beispielsweise Druckmaschinen oder jedwede sonstige mehr oder weniger komplexen Fertigungsanlagen stellt sich immer die Frage, die Fertigungsaufträge so auf die unterschiedlichen Produktionseinrichtungen zu verteilen und zu disponieren, dass zum einen der Fertigungsauftrag im geforderten Zeitrahmen fertiggestellt wird und dass gleichzeitig eine möglichst gleichmäßige Auslastung der Produktionseinrichtungen sowie eine möglichst wirtschaftliche Herstellung der zu fertigenden Produkte sichergestellt ist. Desweiteren können sich auch geplante oder außerplanmäßige Änderungen hinsichtlich der Verfügbarkeit oder der Produktionsmöglichkeiten einer oder mehrerer Produktionseinrichtungen ergeben. Ferner besitzen eine Vielzahl von Unternehmen auch Produktionseinrichtungen an unterschiedlichen Standorten, was eine effizienzoptimierte Planung und Zuordnung eines oder mehrerer Fertigungsaufträge zusätzlich erschwert.

Aus dem Stand der Technik sind zwar bereits verschiedene Hilfsmöglichkeiten bekannt, Fertigungskapazitäten und Fertigungsaufträge wie beispielsweise der Herstellung von fertigen oder teilweise fertiggestellten Druckprodukten im Groben zu planen, wie dies beispielsweise mit sogenannten MIS-Systemen möglich ist. Allerdings können derartige MIS-Systeme nur eine Kapazitätsplanung der jeweiligen eingebundenen Produktionssysteme sicherstellen, so dass im Wesentlichen nur geplante Stillstandszeiten der Produktionseinrichtungen wie beispielsweise Wartungs- und Reinigungsintervalle oder aber die sich theoretisch zum Durchlauf eines Fertigungsauftrages ergebende Produktionszeiten damit verwaltet und gegebenenfalls auch optimiert werden können. Aufgrund der komplexen und vielfältigen Produktionsmöglichkeiten von Produktionseinrichtungen wie beispielsweise Rollen- oder Bogendruckmaschinen mit dem nachgeschalteten Nachverarbeitungsequipment in Verbindung mit den vielzähligen Parametern des zu produzierenden Produktes wie beispielsweise die Formatgröße des fertigen Druckproduktes, die Seitenzahl, die Falz- und Sammelvarianten, der Einsatz von Leimungen oder Heftungen etc. erfolgt gemäß dem Stand der Technik die Zuordnung der jeweiligen Fertigungsaufträge zu spezifischen Produktionseinrichtungen immer noch durch Fachpersonal, so dass die Grundlage für die mit den MIS-Systemen mögliche Auslastungs- und Kapazitätsplanung immer noch von personenbezogenen Entscheidungen abhängt. Insbesondere bei einer Vielzahl von zur Verfügung stehenden Produktionseinrichtungen möglicherweise unterschiedlichster Produktionsverfahren und Produktionsparameter und/oder unterschiedlichster Standorte ist bei manueller Zuordnung der Fertigungsaufträge zu spezifischen Produktionseinrichtungen sehr schnell eine Kapazitätsgrenze als auch nur ein begrenzter Überblick über die grundsätzlich zur Verfügung stehenden Produktionseinrichtungen erreicht.

Ferner ist aus der DE102014114731 ein Verfahren zur Optimierung der Produktionsabfolge bekannt, allerdings lehrt dieses nur die Optimierung der Reihenfolge einer Mehrzahl einer Produktionseinrichtung zugewiesenen Fertigungsaufträgen hinsichtlich mindestens eines Sortierungskriteriums, wobei diese Mehrzahl von Fertigungsaufträgen lediglich nur einer Produktionseinrichtung bereits im Vorfeld zugewiesen wurden.

Desweiteren ist aus der DE102013102756 A1 ein Produktionsplanungs- und Steuerungssystem für Druckmaschinen bekannt, mit der eine Integration von druckformvariablen in einen bislang lediglich nicht-druckformvariablen Technik aufweisenden Maschinenpark von Druckmaschinen möglich ist. Doch auch mit dieser Lehre ist eine übergreifende Planung und Zuordnung von Druckaufträgen nicht möglich.

Der Erfindung liegt daher die Aufgabe zugrunde, ein Verfahren zu entwickeln, mit welchem eine effizienzoptimierte Zuordnung mindestens eines Fertigungsauftrages auf eine spezifische Produktionseinrichtung ohne manuelle Eingriffe und personengebundene Analyse ermöglicht wird.

Diese Aufgabe wird durch ein Verfahren gemäß Anspruch 1 gelöst. Die Erfindung umfasst ein Verfahren, bei welchem die Zuordnung des mindestens einen Fertigungsauftrages auf eine spezifische Produktionseinrichtung hinsichtlich mindestens eines Sortierungskriteriums automatisiert durchgeführt wird.

Ein derartiges Verfahren weist den Vorteil auf, dass durch die Erfassung und Auswertung aller relevanten Jobdaten, welche das zu produzierende Gut beschreiben als auch aller relevanten Produktionseinrichtungsdaten, welche die jeweiligen Produktionsmöglichkeiten und -parameter spezifizieren, für jeden anstehenden Fertigungsauftrag die eine oder gegebenenfalls die Mehrzahl von optimal geeigneten Produktionseinrichtungen erkannt und ausgewählt werden. Somit ist die Zuordnung von Fertigungsaufträgen zu Produktionseinrichtungen nicht mehr Abhängig von der Qualifikation und dem Erfahrungsschatz des jeweiligen Disponenten, dessen Wissen um den zur Verfügung stehenden Maschinenpark zudem endlich und somit begrenzt ist, wodurch sich die bei manueller Zuordnung ergebenden Präferenzen aufgrund der Begrenztheit der Informationen und sich somit nicht auszuschließende suboptimale Zuordnung von Fertigungsaufträgen zu Produktionseinrichtungen erübrigt.

Desweiteren bietet die Erfindung den Vorteil, dass durch die automatische Auswertung eine nahezu unbegrenzte Anzahl von Parametern in nur einem System miteinander abgeglichen werden kann, so dass der bisherige Abgleich zwischen mindestens zwei getrennten Systemen - nämlich das Wissen eines Disponenten um die Produktionsmöglichkeiten zumindest eines Teils des zur Verfügung stehenden Maschinenparks einerseits und der Abgleich mit den in einem manuell gepflegten oder mittels einem MIS-System abgebildeten Kapazitätsplanung der jeweiligen Maschinen andererseits nicht mehr erforderlich ist, so dass sich weniger Schnittstellen und somit weniger Fehlerquellen als auch weniger Pflegeaufwand ergibt.

Auch bietet ein derartig automatisiertes Verfahren der vorliegenden Erfindung den Vorteil, dass bei unvorhergesehenen oder sehr kurzfristig geplanten Änderungen der Verfügbarkeit oder der Produktionsmöglichkeiten von mindestens einer zur Verfügung stehenden Produktionseinrichtung nicht die manuell und daher zeitaufwändig erstellte Belegung der Produktionseinrichtungen nicht wieder sehr zeitaufwändig angepasst werden muss, sondern die Modifikation der Produktionsbelegung kann auch in diesem Fall automatisch und somit ohne zusätzliche Kapazitätsbindung erfolgen.

Ferner wird durch die vorliegende Erfindung das Risiko einer personenbezogenen Fehlerquote ausgeschlossen, was eine nachhaltige, dauerhafte und gleichbleibend hohe Optimierung der Maschinenbelegung ermöglicht.

In einer Ausgestaltung der Erfindung sind in den Produktionseinrichtungsdaten das Produktionsverfahren und/oder die Produktionsmöglichkeiten einer jeden Produktionseinrichtung hinterlegt. Hierzu ist es nicht nur möglich, die Herstellbarkeit eines Fertigungsauftrages durch eine Produktionseinrichtung zu überprüfen, sondern gleichzeitig durch Berücksichtigung unterschiedlicher Produktionsverfahren wie beispielsweise das Offset-, das Tiefdruck- oder aber digitale druckformvariable Druckverfahren im Falle der Herstellung von Druckprodukten das wirtschaftlichste Herstellungsverfahren insbesondere im Hinblick auf die Seitenzahl und die Auflagenhöhe der zu produzierenden Druckprodukte im beispielhaften Fall der Herstellung von Druckprodukten zu eruieren.

In einer weiteren Ausgestaltung der Erfindung umfasst ein jeder Datensatz der Produktionseinrichtungsdaten eine Auflistung zumindest eines Teils aller individuellen Produktionsmöglichkeiten dieser Produktionseinrichtung. Am Beispiel einer Rollendruckmaschine mit Falzwerk und nachgeschaltetem Nachverarbeitungsequipment ist dies beispielsweise eine Auflistung aller oder nur eines Teils der auf der Druckmaschine herstellbaren Druckprodukte, beispielsweise gegliedert nach den Produktgrößen (Breite und Höhe des Druckproduktes), Seitenzahlen (beispielsweise 16-, 24-, 32-, 48-, 64- oder 96-seitige Produkte), Falzvarianten (beispielsweise Broadsheet- oder Tabloidprodukte, kopfgefalzte Produkte, im Kreuzbruch gefalzte Produkte, mittels Sammelproduktion hergestellte Produkte etc.). Somit kann einer Produktionseinrichtung eine Vielzahl von Datensätzen über explizit produzierbare Produkte zugewiesen werden, was den Vorteil hat, dass einem jedem Datensatz das jeweilig zugehörige Produkt und dessen Eigenschaften entnommen werden kann.

Da jedoch bei dieser oben genannten Ausgestaltung dann auch nur explizit die Produktionsmöglichkeiten einer entsprechenden Produktionseinrichtung hinterlegt sind, welche explizit aufgelistet sind, können somit bei einem automatischen Abgleich der Jobdaten eines Fertigungsauftrages mit derartigen expliziten Datensätzen der Produktionseinrichtungsdaten auch nur die Produktionen dieser Produktionseinrichtung zugewiesen werden, welche explizit aufgelistet und genannt sind. Wenn beispielsweise der Datensatz zu einer Produktion, welche auf der Produktionseinrichtung zwar möglich ist aber nicht hinterlegt ist, so geht aus einem automatisierten Abgleich hervor, dass diese Produktion nicht ausgeführt werden kann, wenngleich diese tatsächlich möglich wäre. In einem konkreten Beispiel einer 64-seitigen Rollen-Offset-Druckmaschine würde dies bedeuten, dass wenn in den Produktionseinrichtungsdaten zwar Datensätze für 48- und 64-seitige Druckprodukte hinterlegt sind aber kein Datensatz für ein 56-seitiges Produkt hinterlegt ist, so geht in diesem Fall aus einem automatischen Abgleich hervor, dass ein 56-seitiges Druckprodukt auf dieser speziellen 64-seitigen Druckmaschine nicht produzierbar ist.

Aus diesem Grund weist eine besonders vorteilhafte Ausgestaltung der Erfindung auf, dass aus den Produktionseinrichtungsdaten alle individuellen Produktionsmöglichkeiten der entsprechenden Produktionseinrichtung ableitbar sind. In dieser Ausgestaltung der Erfindung sind zu einer Produktionseinrichtung nicht die expliziten Produktionsmöglichkeiten hinterlegt, vielmehr umfassen die zugehörigen Produktionseinrichtungsdaten vorzugsweise einen parametrisierbaren Datensatz, in welchem die wesentlichen Parameter, welche die jeweiligen Eckdaten wie beispielsweise maximale Bahnbreite, maximale Seitenzahl, Falzmöglichkeiten und deren Kombinatorik, Möglichkeiten der Heftung oder Leimung gegebenenfalls in Abhängigkeit von den Falzvarianten oder weitere Nachverarbeitungsmöglichkeiten hinterlegt sind, so dass aus diesem parametrisierbaren Datensatz und somit aus den derart gestalteten Produktionseinrichtungsdaten alle Produktionsmöglichkeiten berechnet werden können. Eine derartige Ausgestaltung hat den Vorteil, dass dadurch lückenlos alle Produktionsmöglichkeiten nach einmaliger Anlage des parametrisierten Datensatzes abgeleitet werden können, so dass nicht das Risiko besteht, Produktionsmöglichkeiten durch Nicht-Auflistung auszuklammern, obwohl diese auf der entsprechenden Produktionseinrichtung tatsächlich möglich sind.

In einer weiteren besonders vorteilhaften Ausgestaltung der Erfindung werden die Jobdaten geräteneutral bzw. Produktionseinrichtungs-neutral formuliert. Dies ist gänzlich unterschiedlich zum aktuellen Stand der Technik, denn wenn nach dem Stand der Technik ein Fertigungsauftrag, beispielsweise ein Druckauftrag einer Produktionseinrichtung wie beispielsweise einer Rollenrotationsdruckmaschine zugewiesen wird, so wird zur Durchführung des Druckauftrages ein Produktionsdatensatz erzeugt, der explizit nur für die spezifische Produktionseinrichtung gültig ist. Wird aus einem beliebigen Grund derselbe Druckauftrag auf eine andere, möglicherweise sogar von den Parametern her abweichende Druckmaschine verlegt, so muss für diese zweite Druckmaschine wieder ein neuer, zweiter Datensatz erstellt werden.

Um diesen Aufwand zukünftig zu vermeiden und um einen Abgleich der Jobdaten mit den Produktionseinrichtungsdaten zu optimieren, umfassen die Jobdaten Produktionseinrichtungs-neutrale Parameter, welche sozusagen die Kerndaten des Fertigungsauftrages umfassen. Am Beispiel eines Druckauftrages sind dies beispielsweise die Seitenzahl, Daten zum Format (Höhe und Breite) des Druckproduktes, Angaben zum Bedruckstoff, die Auflagenhöhe, Informationen zur Heftung oder Leimung, Angaben zur Farbigkeit uvm.
Somit lassen sich die Jobdaten mit den Produktionseinrichtungsdaten unterschiedlichster Produktionseinrichtungen abgleichen und letztendlich einer spezifischen Produktionseinrichtung zuweisen.

In einer weiteren besonders vorteilhaften Ausgestaltung der Erfindung erfolgt bei Veränderung mindestens eines Parameters der Produktionseinrichtungsdaten mindestens einer relevanten Produktionseinrichtung eine erneute Überprüfung der Zuordnung der dieser spezifischen Produktionseinrichtung zugewiesenen Fertigungsaufträge. Im Bedarfsfall wird dann die Zuordnung des mindestens einen Fertigungsauftrages zu mindestens einer spezifischen Produktionseinrichtung korrigiert. Im beispielhaften Fall kann dies bedeuten, dass beispielsweise eine Produktionseinrichtung außerplanmäßig für einen gewissen Zeitraum ausfällt. Wird der relevante Parameter der Verfügbarkeit entweder manuell oder sogar automatisch durch die Maschinensteuerung korrigiert, so werden die in dem Ausfallzeitraum dieser Produktionseinrichtung zugewiesenen Fertigungsaufträge automatisch ermittelt und vorteilhafterweise durch erneute Überprüfung mit den Produktionseinrichtungsdaten der restlichen zur Verfügung stehenden Produktionseinrichtungen einer anderen oder einer Mehrzahl von anderen Produktionseinrichtung zugewiesen, auf welchen die relevanten Fertigungsaufträge ebenfalls produziert werden können, möglicherweise jedoch unter Inkaufnahme diverser Nachteile wie eine suboptimale Wirtschaftlichkeit.

Als ein anderer Fall ist in diesem Zusammenhang möglich, dass mindestens ein Ausstattungsmerkmal der spezifischen Produktionseinrichtung nicht funktionsfähig ist, was am Beispiel einer Rollendruckmaschine beispielsweise der Ausfall eines Heftapparates sein kann. In diesem Fall werden die der spezifischen Produktionseinrichtung zugewiesenen Fertigungsaufträge nochmals nach Relevanz der Heftung hin durchsucht, gegebenenfalls müssen dann nur die Druckaufträge, bei denen eben diese Heftung erforderlich ist, hinsichtlich der Zuweisung auf andere geeignete Produktionseinrichtungen hin überprüft. Wie den Beispielen zu entnehmen ist, ermöglicht dies ein sehr zeitnahes und somit gegebenenfalls frühzeitiges Reagieren auf unvorhergesehene oder außerplanmäßige Veränderungen der Verfügbarkeit von Produktionseinrichtungen und bindet im Vergleich zum manuellen Abgleich der relevanten Fertigungsaufträge somit deutlich weniger Ressourcen und senkt zudem das Fehlerrisiko.

In einer weiteren besonders vorteilhaften Ausgestaltung der Erfindung wird ein Fertigungsauftrag aufgrund mindestens eines in den Jobdaten hinterlegten Parametern auf eine Mehrzahl von gleichartigen oder voneinander unterschiedlichen Produktionseinrichtungen aufgeteilt. Eine derartige Maßnahme kann beispielsweise erforderlich oder sinnfällig sein, wenn beispielsweise eine hohes Fertigungsvolumen entweder mit nur einer kurzen Durchlaufzeit produziert werden muss, so dass aus Gründen der kurzfristig abzuarbeitenden Kapazität dieser eine Fertigungsauftrag zur mehr oder weniger zeitgleichen Abarbeitung auf mehrere Produktionseinrichtungen aufgeteilt wird, oder aber der Fertigungsauftrag ist in Teilmengen an unterschiedliche Lieferanschriften zu versenden, so dass bei einer zentralen Produktion lange und somit zeitintensive oder aber kostenintensive Versandwege mit zu berücksichtigen wären.
Am Beispiel eines Druckauftrages kann dies beispielsweise eine hohe Auflage eines Werbeprospektes sein, welcher mit kurzer Vorlaufzeit in großer Auflagenhöhe produziert und an verschiedene, relativ weit voneinander entfernte Verteilzentren anzuliefern ist. In diesem Falle kann es von Vorteil sein, diesen einen Druckauftrag auf mehrere Druckmaschinen zur in etwa gleichzeitigen Produktion zu verteilen, welche vorzugsweise auch noch derart verteilt sind, dass kurze und/oder kostengünstige Lieferwege an die Anlieferadressen sichergestellt werden können. Dies kann insbesondere bei Märkten mit großer geographischer Ausdehnung von erheblichem Vorteil sein.

Bei dieser Ausgestaltung der Erfindung ist es ebenso möglich, dass die Teil-Fertigungsaufträge auf in etwa gleichartige Produktionseinrichtungen wie beispielsweise gleichartige Rollen-Offset- oder Rollen-Tiefdruck-Druckmaschinen aufgeteilt werden, oder aber ob die Teil-Fertigungsaufträge auf voneinander unterschiedlichen Produktionseinrichtungen wie beispielsweise Rollen- und Bogendruckmaschinen oder aber nicht-druckformvariable Druckmaschinen wie beispielsweise Offset- oder Tiefdruck-Druckmaschinen und druckformvariable Druckmaschinen wie beispielsweise Inkjet-Druckmaschinen oder toner-basierte Digitaldruckmaschinen aufgeteilt werden. Abhängig von den Parametern, insbesondere von den Auflagehöhen der Teil-Fertigungsaufträge kann es von Vorteil sein, diese auf unterschiedliche Produktionseinrichtungen zu disponieren.

Es wird angemerkt, dass das erfindungsgemäße Verfahren für eine Vielzahl von unterschiedlichen Produktionseinrichtungen einsetzbar ist, wenngleich in der hier vorliegenden Beschreibung ausschließlich konkrete Beispiele anhand von Druckmaschinen genannt werden.

Bevorzugte Weiterbildungen der Erfindung ergeben sich aus den Unteransprüchen und der nachfolgenden Beschreibung. Verschiedene Ausführungsbeispiele werden, ohne hierauf beschränkt zu sein, anhand der Zeichnungen näher erläutert. Dabei zeigt:
- Fig. 1:: Diagramm eines erfindungsgemäßen Jobdaten-Management-Systems mit einer zentralen Verwaltung der Jobdaten
- Fig. 2:: Diagramm eines erfindungsgemäßen Jobdaten-Management-Systems mit einer zusätzlichen dezentralen Verwaltung der Jobdaten

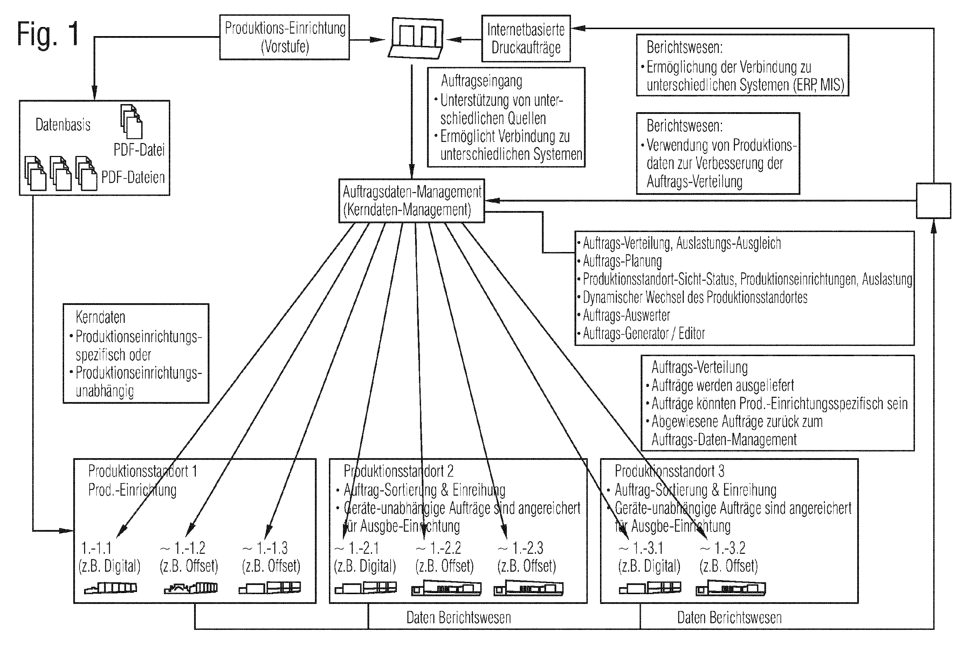

Fig. 1 zeigt schematisch ein Prinzip der Zuordnung von Fertigungsaufträgen mit bekannten Jobdaten aus einer oder aber einer Mehrzahl von anstehenden Fertigungsaufträgen auf eine spezifische Produktionseinrichtung von einer Mehrzahl von Produktionseinrichtungen, wobei jede der Produktionseinrichtungen durch Produktionseinrichtungsdaten hinsichtlich ihrer Produktionsmöglichkeiten beschreibbar ist.

So kommen entweder über ein Pre-press System oder aber über andere Quellen wie beispielsweise über das sogenannte Web2Print neue Druckaufträge in die Zentrale eines Druckereianbieters.
An dieser Stelle wird nochmals darauf hingewiesen, dass das erfindungsgemäße Verfahren auch für andere Produktions- und Fertigungsverfahren wie beispielsweise die spanende und spanlose Herstellung von Werkstücken angewendet werden kann. Um jedoch eine konkrete Anwendung anhand der Figuren zu erläutern, erfolgt dies anhand der Herstellung von Druckereierzeugnissen wie Magazine, Kataloge, Zeitungen, Flyer etc.

Die Druckaufträge, nachfolgend als Fertigungsaufträge bezeichnet, da die Herstellung der Druckaufträge ein klassisches Fertigungsverfahren darstellt, welches mindestens einen Fertigungsschritt umfasst.

Jeder dieser Fertigungsaufträge ist durch Jobdaten beschreibbar, welche die Eigenschaften des entsprechenden Druckproduktes beschreiben. Man könnte, wenn man die Druckinhalte herausrechnet, diese Jobdaten auch als Kerndaten eines Druckproduktes bezeichnen, da diese alle wesentlichen Parameter umfassen. Dies sind beispielsweise die Abmessungen des Druckproduktes, die Seitenzahl, die Bedruckstoffeigenschaften, die Umschlagsart, die Bindungsart (Bindung, Heftung, Leimung etc.), die Auflagenhöhe, Gliederung in Teilauflagen, der Liefertermin etc. Diese Jobdaten werden vorzugsweise Produktionseinrichtungs-neutral, d. h. in einem geräte-neutralen Format abgespeichert.

Zur Herstellung der vielfältigen Fertigungsaufträge besitzt das beispielhalft in Figur 1 dargestellte Unternehmen eine Mehrzahl von Produktionseinrichtungen, welche auf eine Mehrzahl von Produktionsstandorten verteilt sind. In jeder dieser Produktionsstandorte befindet sich mindestens eine Produktionseinrichtung in Form unterschiedlicher Druckmaschinen.

Jede dieser Produktionseinrichtungen besitzt spezielle und möglicherweise spezifische Produktionsmöglichkeiten, welche in den Produktionseinrichtungsdaten abgebildet werden. Die Produktionseinrichtungsdaten bilden ab, wie und welche Produkte durch die jeweilige Produktionseinrichtung hergestellt werden können. Dies sind ebenfalls Daten wie die Abschnittslänge und daraus resultierend die zu produzierenden Produktgrößen, maximale und minimale Produktionsgeschwindigkeiten, die Farbigkeit, die unterschiedlichen produzierbaren Seitenzahlen, Falzvarianten und sonstigen Leimungs-, Heftungs- und Binde-Möglichkeiten. Hierbei ist es möglich, dass als Produktionseinrichtung nicht nur die Druckmaschine wie beispielsweise eine Rollendruckmaschine einschließlich Falzapparat, sondern einschließlich aller nachgeordneten Nachverarbeitungslinien wie Bindereimaschinen etc. betrachtet wird.

Die Produktionseinrichtungsdaten umfassen aber auch Inhalte zu den Produktionsverfahren, so dass in den Produktionseinrichtungsdaten auch Angaben beispielsweise zum jeweiligen Druckverfahren, das heißt, ob es sich bei der Produktionseinrichtung um eine Offset-, eine Tiefdruck-, eine Flexodruck- oder eine sogenannte digitale und somit druckformvariable Druckmaschine wie beispielsweise Inkjet-Druckeinrichtungen oder Toner-basierte Drucksysteme handelt, vorhanden sind. Somit können die Produktionseinrichtungsdaten auch Daten zu Rüstzeiten, üblichen Makulaturwerten etc. umfassen.

Die Produktionseinrichtungsdaten können in einer ersten Ausgestaltung die einzelnen möglichen Produktionen in Form einer Liste ausgeführt sein, so dass jede mögliche Produktionsvariante expliziert aufgeführt ist. Da eine derartige Auflistung jedoch den Nachteil hat, dass dann eine nicht explizit aufgeführte Produktion auch bei der Auswahl nicht berücksichtigt werden kann, kommt vorzugsweise zur Abbildung der Produktionsmöglichkeiten eine Lösung zum Einsatz, bei welcher aus den Produktionseinrichtungsdaten, welche pro Produktionseinrichtung in einer Matrix eingebaut sind, alle Produktionsmöglichkeiten einer jeden Produktionseinrichtung errechnet und somit abgeleitet werden können.
Zur vereinfachten Abwicklung können hierzu beispielsweise die Produktionseinrichtungsdaten mit Hilfe eines neutralen Datenblattes, in welche die Parameter der Produktionseinrichtungsdaten übertragen werden, einfach parametrisiert werden.

Somit sind erfindungsgemäß in den Jobdaten die wesentlichen Daten, sozusagen die Kerndaten eines Fertigungsauftrages zusammengefasst, welche vorzugsweise Produktionseinrichtungs-neutral formuliert und aufgebaut sind, um diese für alle unterschiedlichen Produktionseinrichtungen nutzen zu können. Gleichzeitig sind von jeder einzelnen Produktionseinrichtung alle Produktionsmöglichkeiten bekannt und abgreifbar.

Somit werden erfindungsgemäß zur Zuordnung des mindestens einen Fertigungsauftrages auf mindestens eine Produktionseinrichtung hinsichtlich mindestens eines Sortierungskriteriums automatisiert durchgeführt, in dem die Jobdaten mit den aus den Produktionseinrichtungsdaten ableitbaren Produktionsmöglichkeiten automatisiert abgeglichen werden. Dies ist durch Recheneinrichtungen mit entsprechender Software möglich.

Dadurch ist es mit einem geringen Aufwand möglich, die möglicherweise hohe Anzahl der in der Zentrale zu verwaltenden Fertigungsaufträge auf die einzelnen Produktionseinrichtungen zuzuordnen. In Figur 1 ist eine Variante dargestellt, bei welcher die Zuordnung der einzelnen Fertigungsaufträge direkt über das erfindungsgemäße Verwaltungssystem zur Durchführung des erfindungsgemäßen Verfahrens von einer Zentrale aus zu den einzelnen Produktionseinrichtungen, welche im Fig. 1 dargestellten Beispiel auf drei unterschiedliche Produktionsstandorte verteilt sind.

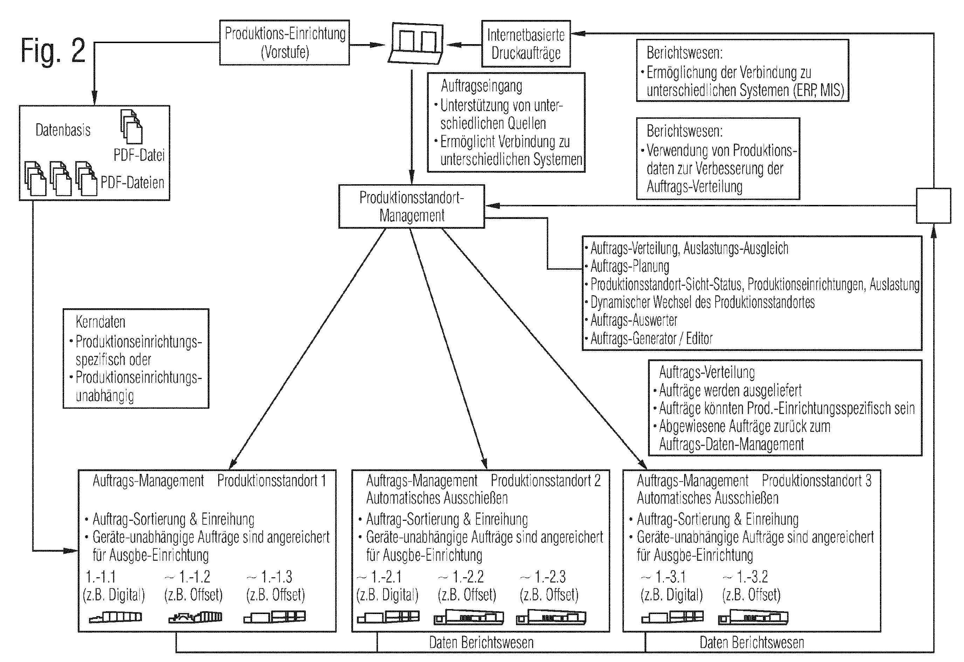

In Fig. 2 hingegen ist eine Variante dargestellt, bei welcher zwar bereits in der Zentrale eine Verteilung der Fertigungsaufträge an die einzelnen Standorte oder bereits der einzelnen Maschinen durch automatischen Abgleich der Jobdaten mit den Produktionseinrichtungsdaten erfolgt, allerdings erfolgt bei der in Fig. 2 dargestellten Variante die Disposition auf die einzelnen Produktionseinrichtungen dezentral durch die Verwaltung an den einzelnen Standorten. Dies ist insbesondere dann von Vorteil, wenn an einem Standort mehrere Produktionseinrichtungen mit in etwa denselben Produktionsmöglichkeiten vorhanden sind, so dass beispielsweise die dezentrale Disposition im wesentlichen nur die Auslastung und die Verfügbarkeit berücksichtigen muss, was bei einer dezentralen Organisation insbesondere bei größeren Produktionsstandorten von Vorteil sein kann.

Die dezentrale Zuordnung von Fertigungsaufträgen zu einzelnen Produktionseinrichtungen kann entweder über die Software zur Durchführung des erfindungsgemäßen Verfahrens erfolgen oder aber, da ja im wesentlichen nur rein kapazitive Aspekte zu berücksichtigen sind, auch über durch Schnittstellen angebundene oder autarke sogenannte MIS-Systeme zur Kapazitätsplanung durchgeführt werden.

Sowohl bei der in Fig. 1 als auch bei der in Fig. 2 dargestellten Variante ist es erfindungsgemäß möglich, dass bei Veränderung mindestens eines Parameters der Produktionseinrichtungsdaten einer relevanten Produktionseinrichtung eine erneute Überprüfung der Zuordnung der dieser spezifischen Produktionseinrichtung zugewiesenen Fertigungsaufträge erfolgt.
Dies kann beispielsweise eintreten, wenn eine Produktionseinrichtung wie beispielsweise eine Druckmaschine oder aber eine für den Fertigungsauftrag erforderliche Nach- oder Weiterverarbeitungskomponente für einen gewissen Zeitraum ausfällt; in diesem Fall würde sich dann der Parameter der Verfügbarkeit der entsprechenden Produktionseinrichtung ändern. Ein anderer Fall ist beispielsweise, wenn eine gewisse Funktionalität der Druckmaschine oder einer zum entsprechenden Fertigungsauftrag erforderlichen Weiterverarbeitungskomponente ausfällt, wie beispielsweise ein Längsleimeinrichtung, ein Heftapparat oder beispielsweise der zweite Querfalz. Alle Fertigungsaufträge, welche dieser Produktionseinrichtung zugewiesen wurden und diese entsprechende Funktionalität benötigen, können bis zur Wiederherstellung dieser Funktionalität möglicherweise - zumindest wenn es innerhalb der Produktionseinrichtung keine anderweitige Redundanz oder Substitution dieser Funktion gibt - einzelne Fertigungsaufträge nicht auf dieser spezifischen Produktionseinrichtung hergestellt werden. Insofern können alle Fertigungsaufträge, welche die zumindest vorübergehend nicht verfügbare Funktionalität benötigen, durch den erfindungsgemäßen Automatismus durch Abgleich der Jobdaten der Produktionseinrichtung zugewiesenen Fertigungsaufträge mit den angepassten Produktionseinrichtungsdaten sehr schnell ohne manuellen Eingriff und somit beispielsweise mit sehr hoher, nicht von der Qualifikation des entsprechenden Disponenten abhängiger Zuverlässigkeit ermittelt und anderen geeigneten Produktionseinrichtungen zugewiesen werden, so dass die Zuordnung des mindestens einen Fertigungsauftrages zu mindestens einer spezifischen Produktionseinrichtung korrigiert wird.

Sollte ein Fertigungsauftrag Jobdaten aufweisen, welche nicht mit einem Produktionsschritt durch die verfügbaren Produktionseinrichtungen ausgeführt werden können, da die Diskrepanz zwischen den Jobdaten und den Produktionseinrichtungsdaten in mindestens einem Kriterium so groß ist, als dass mehrere Produktionsdurchläufe erforderlich sind, so kann das erfindungsgemäße Verfahren in Abhängigkeit von speziellen Parametern auch die Produktion des Fertigungsauftrages in mehrere Teilfertigungsaufträge berechnen.
Dies ist beispielsweise der Fall, wenn beispielsweise ein 144-seitiges Druckprodukt herzustellen ist, aber alle zur Verfügung stehenden Druckmaschinen lediglich eine Druckkapazität aufweisen, welche kleiner als die geforderte Seitenzahl ist. Beispielsweise sind aktuell nur Heatset-Anlagen mit einer maximalen Kapazität zur Herstellung von 96-seitigen Signaturen bekannt. Sofern die anderen Parameter der Jobdaten mit den Produktionseinrichtungsdaten wie Produktgröße, Falzmöglichkeiten, Bindung etc. übereinstimmen, kann durch das erfindungsgemäße Verfahren errechnet werden, dass der Fertigungsauftrag hergestellt werden kann, wenn der Fertigungsauftrag in eine Mehrzahl von Teilfertigungsaufträgen zerlegt wird, wobei die Teilprodukte in einem zusätzlichen Arbeitsschritt zum gewünschten Endprodukt wieder zusammengeführt werden können. Bezogen auf das Beispiel des 144-seitigen Produktes bedeutet dies bei Verfügbarkeit einer Druckmaschine zur Herstellung von maximal 96-seitigen Druckprodukten, dass der Fertigungsauftrag zur Herstellung des 144-seitigen Produktes in einen ersten Teilfertigungsauftrag mit einem 96-seitigen Signatur und einen zweiten Teilfertigungsauftrag mit einer 48-seitigen Signatur aufgeteilt wird.

Ferner ist es auch möglich, dass ein Fertigungsauftrag auf eine Mehrzahl von gleichartigen oder voneinander unterschiedlichen Produktionseinrichtungen aufgeteilt wird.
So ist es mit Bezug auf die Figuren 1 und 2 möglich oder sogar von Vorteil, einen entweder vom Auflagenvolumen sehr großen Druckauftrag insbesondere bei kurzen geforderten Durchlaufzeiten, auf mehrere Maschinen aufzuteilen, um beispielsweise eine kurze Durchlaufzeit oder aber eine vereinfachte Verteilung durch kurze Transportwege sicherzustellen.
Somit kann es abhängig von den jeweiligen Teilfertigungsaufträgen oder beispielsweise den Teilauflagen sogar von Vorteil sein, wenn diese auf voneinander unterschiedlichen Produktionseinrichtungen aufgeteilt werden. Dies kann bedeuten, dass die voneinander unterschiedlichen Produktionseinrichtungen nur unterschiedliche Größe, Produktionskapazität oder eine voneinander abweichende Konfiguration aufweisen. Bezogen auf das Beispiel einer Druckerei kann dies bedeuten, dass ein Druckauftrag, welcher in mehrere Teilauflagen aufgespalten wird, an einem Standort auf einer großvolumigen Offset-Rollendruckmaschine wie beispielsweise einer 64-Seiten-Druckanlage und an einem anderen Standort auf einer kleinvolumigen Offset-Rollendruckmaschine wie beispielsweise einer 16-Seiten-Druckanlage oder möglicherweise sogar mit einer Bogenoffset-Druckmaschine produziert wird.

Es ist aber auch möglich, dass die Produktionseinrichtungen, welche die jeweiligen Teilfertigungsaufträge herstellen, voneinander unterschiedliche Produktionsverfahren nutzen. So kann es beispielsweise von Vorteil sein, eine hohe Teilauflage auf einer Rollen- oder Bogen-Offset- oder Tiefdruckanlage - und somit auf einer Druckmaschine mit einem nicht-druckformvariablen Druckverfahren - zu drucken und dass eine kleine Teilauflage auf einer Digitaldruckmaschine und somit auf einer Druckmaschine mit einem druckformvariablen Druckverfahren gedruckt wird.
Hierbei ist es unentscheidend, ob die Produktionseinrichtungen auf eine Mehrzahl von Standorten verteilt sind oder nur an einem Standort angesiedelt sind.

### Bezugszeichenliste

- 1: Produktionseinrichtung
- 2: Produktionseinrichtungsdaten
- 3: Produktionsmöglichkeit
- 4: Produktionsverfahren
- 5: Datensatz
- 6: Standort

- 10: Fertigungsauftrag
- 11: Jobdaten
- 12: Sortierungskriterium

## Patentansprüche

1. Verfahren zur Zuordnung mindestens eines Fertigungsauftrages mit bekannten Jobdaten aus einer oder einer Mehrzahl von zur Abarbeitung anstehenden Fertigungsaufträgen auf eine spezifische Produktionseinrichtung von einer Mehrzahl von Produktionseinrichtungen, wobei jede der Produktionseinrichtungen durch Produktionseinrichtungsdaten hinsichtlich ihrer Produktionsmöglichkeiten beschreibbar ist, **dadurch gekennzeichnet, dass** die Zuordnung des mindestens einen Fertigungsauftrages auf mindestens eine spezifische Produktionseinrichtung hinsichtlich mindestens eines Sortierungskriteriums automatisiert durchgeführt wird.

2. Verfahren nach Anspruch 1, **dadurch gekennzeichnet, dass** in den Produktionseinrichtungsdaten das Produktionsverfahren und/oder die Produktionsmöglichkeiten einer jeden Produktionseinrichtung hinterlegt werden.

3. Verfahren nach Anspruch 2, **dadurch gekennzeichnet, dass** der Datensatz alle individuellen Produktionsmöglichkeiten umfasst.

4. Verfahren nach Anspruch 2, **dadurch gekennzeichnet, dass** aus den Produktionseinrichtungsdaten alle Produktionsmöglichkeiten ableitbar sind.

5. Verfahren nach Anspruch 4, **dadurch gekennzeichnet, dass** die Produktionseinrichtungsdaten mit Hilfe eines neutralen Datenblattes parametriert werden.

6. Verfahren nach einem der Ansprüche 1 bis 5, **dadurch gekennzeichnet, dass** die Jobdaten Produktionseinrichtungs-neutral formuliert werden.

7. Verfahren nach einem der Ansprüche 1 bis 6, **dadurch gekennzeichnet, dass** bei Veränderung mindestens eines Parameters der Produktionseinrichtungsdaten der relevanten Produktionseinrichtung eine erneute Überprüfung der Zuordnung der dieser spezifischen Produktionseinrichtung zugewiesenen Fertigungsaufträge erfolgt.

8. Verfahren nach Anspruch 7, **dadurch gekennzeichnet, dass** im Bedarfsfall die Zuordnung des mindestens einen Fertigungsauftrages zu mindestens einer spezifischen Produktionseinrichtung korrigiert wird.

9. Verfahren nach einem der Ansprüche 1 bis 8, **dadurch gekennzeichnet, dass** ein Fertigungsauftrag auf eine Mehrzahl von gleichartigen oder voneinander unterschiedlichen Produktionseinrichtungen aufgeteilt wird.

10. Verfahren nach einem der Ansprüche 1 bis 9, **dadurch gekennzeichnet, dass** abhängig von der Relation der Jobdaten zu den Produktionseinrichtungsdaten ein Fertigungsauftrag in eine Mehrzahl von TeilFertigungsaufträge aufgeteilt wird.

11. Verfahren nach Anspruch 10, **dadurch gekennzeichnet, dass** die Teilfertigungsaufträge auf derselben oder auf unterschiedlichen Produktionseinrichtungen produziert werden.

12. Verfahren nach einem der vorhergehenden Ansprüche, **dadurch gekennzeichnet, dass** Produktionseinrichtungen mit unterschiedlichen Produktionsverfahren und/oder unterschiedlichen Produktionsmöglichkeiten umfasst werden.

13. Verfahren nach einem der vorhergehenden Ansprüche, **dadurch gekennzeichnet, dass die Produktionseinrichtungen** auf eine Mehrzahl von Standorten verteilt sind.

14. Verfahren nach einem der Ansprüche 1 bis 13, **dadurch gekennzeichnet, dass** die Produktionseinrichtungen Druckeinrichtungen umfassen

15. Verfahren nach Anspruch 14, **dadurch gekennzeichnet, dass** die Jobdaten und/oder die Produktionseinrichtungsdaten Angaben zur Produktgröße, Seitenzahl, Bedruckstoff, Druckverfahren, Farbigkeit, Falzart, Bindung, Produktionsgeschwindigkeiten, Rüstzeiten, Verfügbarkeiten, Stillstandszeiten umfassen.
